# EUROPEAN PATENT APPLICATION

(11) **EP 3 893 358 A1**
(43) Date of publication of application: **13.10.2021**
(21) Application number: 19891737.9
(22) Date of filing: 06.09.2019
(51) Int. Cl.: H02J 7/04

(54) **SOCKET**

(30) Priority: 05.12.2018 CN 201822033974 U
(71) Applicant: Schneider Electric (Australia) Pty Limited, New South Wales 2113 (AU)
(72) Inventor: DENG, Zhuomin, Shenzhen, Guangdong 518000 (CN); ZHANG, Guoqiang, Shenzhen, Guangdong 518000 (CN)
(74) Representative: Murgitroyd & Company
(86) International application number: PCT/CN2019/104705
(87) International publication number: WO 2020/114028

(57) **Abstract**

The present disclosure relates to a socket (100). The socket comprises: a charging port (110); an AC/DC converter (120); a charging controller (130), which is configured to, in response to the charging port (110) being connected to a device to be charged (200), determine an expected charging voltage and an expected charging current supported by the device to be charged (200); and a power supply controller (140), which is coupled to the charging controller (130) and is configured to adjust an output voltage and output current of the AC/DC converter (120) based on the determined expected charging voltage and expected charging current.

## Description

### TECHNICAL FIELD

The embodiments of the present disclosure relate to the field of electrical equipment, and in particular to a socket.

### BACKGROUND

With the widespread application of mobile devices, various sockets are being provided for home furnishings and public places, wherein most of the sockets have dedicated charging ports for mobile devices, such as USB charging ports.

On the other hand, with the development of battery technology, the battery capacity used in mobile devices such as smart phones or tablet computers continues to increase. A variety of different charging schemes have emerged along with it, which provide different charging voltages and charging currents in order to provide faster charging for mobile devices.

However, different mobile devices usually require dedicated charging adapters in order to provide suitable charging voltage and charging current. Therefore, it is a problem to use sockets with limited space to provide the best charging solution for various mobile devices.

### SUMMARY

The embodiments of the present disclosure provide a socket. The socket comprises: a charging port; an AC/DC converter; a charging controller, which is configured to, in response to the charging port being connected to a device to be charged, determine an expected charging voltage and an expected charging current supported by the device to be charged; and a power supply controller, which is coupled to the charging controller and is configured to adjust an output voltage and output current of the AC/DC converter based on the determined expected charging voltage and expected charging current.

With the socket according to the embodiments of the present disclosure, the actual output voltage and actual output current of the socket can be adjusted based on the expected charging voltage and expected charging current supported by the device to be charged. As a result, the limited charging ports in the socket can be used to provide the best charging solutions for devices with different specifications.

In some embodiments, the charging controller comprises: an identification unit, which is configured to identify a charging protocol supported by the device to be charged; a storage unit, which is configured to store expected charging voltages and expected charging currents specified by a plurality of charging protocols; and an ascertaining unit, which is configured to acquire the corresponding expected charging voltage and expected charging current from the storage unit based on the charging protocol identified by the identification unit and send them to the power supply controller.

In some embodiments, the charging controller further comprises: a monitoring unit, which is configured to, in response to the actual charging current exceeding the expected charging current and reaching a predetermined threshold, stop providing output voltage and output current to the device to be charged, and/or which is configured to, in respond to the expected charging current of the device to be charged exceeding the rated current of the AC/DC converter, limit the output current of the AC/DC converter to the rated current.

In some embodiments, the AC/DC converter comprises: a transformer with a primary side and a secondary side; a power switch, which is coupled to the primary side of the transformer and is configured to be turned on based on the expected charging voltage under the control of the power supply controller to adjust the output voltage; an input rectifier filter, which is coupled between the AC input and the primary side of the transformer; and an output rectifier filter, which is coupled between the secondary side of the transformer and the charging port.

In some embodiments, the power supply controller comprises: a switch control unit, which is configured to turn on the power switch based on the expected charging voltage to adjust the output voltage; and a temperature sensing unit, which is configured to, in response to the temperature of the AC/DC converter exceeding a predetermined threshold, turn off the power switch by means of the switch control unit to stop providing output voltage and output current.

In some embodiments, the AC/DC converter is connected to the power supply controller and/or the charging controller to provide working voltage.

In some embodiments, the socket further comprises a socket port, which is configured to provide AC output voltage.

In some embodiments, the socket is designed as a panel mounted socket.

In some embodiments, the charging port is a USB port.

In some embodiments, the socket port is a two-hole, three-hole or five-hole socket port.

In some embodiments, the charging port, the AC/DC converter, the charging controller and the power supply controller are integrated in a charging module, which is detachably mounted in the socket.

### BRIEF DESCRIPTION OF THE DRAWINGS

The drawings herein are provided to further explain the present disclosure and constitute a part of the present disclosure. The exemplary embodiments of the present disclosure and their descriptions are used to explain the present disclosure, but not to improperly limit the present disclosure.
FIG. 1 illustrates a block diagram of a socket 100 according to an embodiment of the present disclosure;
FIG. 2 illustrates a block diagram of a charging controller 130 of a socket 100 according to an embodiment of the present disclosure;
FIG. 3 illustrates a block diagram of an AC/DC converter 120 and a power supply controller of a socket 100 according to an embodiment of the present disclosure.

Throughout the drawings, the same or similar reference signs are used to designate the same or similar elements.

### DETAILED DESCRIPTION OF EMBODIMENTS

The technical solution of the present disclosure will be illustrated in greater detail below with reference to some embodiments. It should be appreciated that these embodiments are described to better explain and enable those skilled in the art to better understand the present disclosure and is not intended for limiting the scope disclosed herein. On the basis of the embodiments given below, those skilled in the art can combine and adjust features of the embodiments in any manner, which shall belong to the scope of protection of the present disclosure.

As used herein, the term "comprises" and its variants are to be read as open-ended terms that mean "comprises, but is not limited to." The term "based on" is to be read as "based at least in part on." The term "one example embodiment" is to be read as "at least one embodiment." The term "another embodiment" is to be read as "at least another embodiment." Terms "first," "second" and others can denote different or identical objects. The following text may also contain other explicit or implicit definitions. Unless indicated otherwise, the meaning of the terms is consistent through the context of the present disclosure.

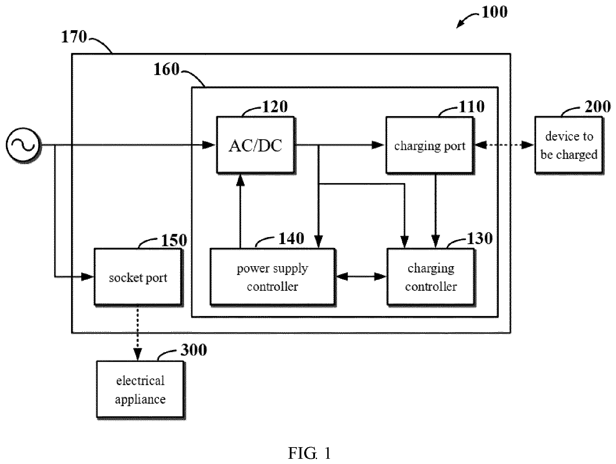

FIG. 1 illustrates a block diagram of a socket 100 according to an embodiment of the present disclosure. The socket 100 may be, for example, a panel mounted socket or a floor mounted socket, which has a housing 170 to encapsulate various electrical components inside, so as to prevent the risk of electric shock.

In the embodiment shown in FIG. 1, the socket 100 comprises a charging port 110, such as a USB port, which can be connected to a device to be charged 200 (such as a smart phone or a tablet computer) and provides a DC voltage to charge the device to be charged 200.

In the embodiment shown in FIG. 1, the socket 100 further comprises a conventional socket port 150, which can be connected to an electrical appliance 300 to provide an AC working voltage required by the electrical appliance 300. The socket port 150 may be a two-hole socket port, a three-hole socket port, or a five-hole socket port.

The socket 100 further comprises an AC/DC converter 120, a charging controller 130, and a power supply controller 140. When the charging port 110 is connected to the device to be charged 200, the charging controller 130 may determine the expected charging voltage and the expected charging current supported by the device to be charged 200, and transmit corresponding information to the power supply controller 140. The power supply controller 140 adjusts the output voltage and output current of the AC/DC converter 120 based on the determined expected charging voltage and expected charging current.

In this way, the output voltage and output current of the AC/DC converter 120 can be accurately adjusted according to the charging performance supported by the device to be charged 200, so as to provide the best charging scheme for devices 200 with different specifications, especially the device to be charged 200 that supports fast charging function. As a result, the charging duration can be shortened and the charging efficiency can be improved.

In addition, there is no need to provide dedicated charging ports on the sockets for mobile devices that support different charging protocols. In other words, only one charging port needs to be provided on the socket to meet charging requirements of different charging devices. Therefore, the manufacturing cost can be reduced, and the internal space of the socket can be saved, so that the socket structure is more compact.

Herein, the expected charging voltage and the expected charging current can change dynamically. For example, when the battery power of the device to be charged 200 is low, such as less than 30% of the battery power, the device to be charged can be set to a higher expected charging current, so as to more quickly charge the battery.

With increasing of the battery power, the expected charging current is dynamically adjusted. When the battery power of the device to be charged 200 reaches a high level, such as higher than 90% of the battery power, the device to be charged can be set to a lower expected charging current, so as to protect the battery from overcharging.

It should be understood that the expected charging current is only exemplarily described herein. The present disclosure does not exclude the corresponding dynamic adjustment of the expected charging voltage.

In some embodiments, the AC/DC converter 120 is connected to the power supply controller 140 and/or the charging controller 130 to provide working voltage.

In this way, the circuit design can be simplified, because there is no need to design additional working voltage supply circuits for the power supply controller 140 and the charging controller 130.

In some embodiments, the charging port 110, the AC/DC converter 120, the charging controller 130 and the power supply controller 140 are integrated in a charging module 160, which is detachably mounted in the socket 100.

In this way, the electrical components in the socket 100 can be modularly designed, so that the DC part for charging mobile devices and the AC part for powering electrical appliances are separated from each other. When the component for charging the mobile device has a fault, it can be easily disassembled, so that only the corresponding charging module 160 needs to be replaced.

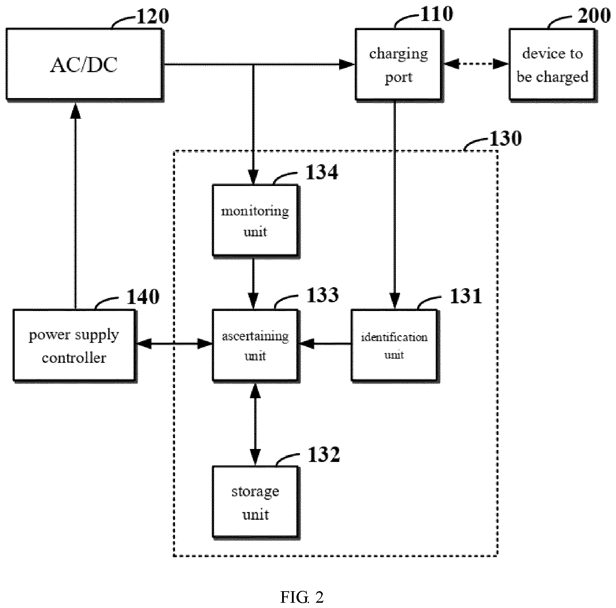

FIG. 2 illustrates a block diagram of a charging controller 130 of a socket 100 according to an embodiment of the present disclosure. In the embodiment shown in FIG. 2, the charging controller 130 comprises an identification unit 131, a storage unit 132 and an ascertaining unit 133.

When the device to be charged 200 is connected to the charging port 110, the identification unit 131 first identifies the charging protocol supported by the device to be charged 200. For example, the charging protocol may be the currently mature quick charging protocol, such as Quick Charge (QC), USB Power Delivery Specification (PD), VOOC Flash Charge, Super Charge Protocol (SCP) and Fast Charging Protocol (FCP), etc.

In the storage unit 132, expected charging voltages and expected charging currents specified by a plurality of charging protocols are stored. For example, the voltage 5V, 9V, 15V or 20V and the current 1.5A, 2A, 3A or 5A supported by the USB Power Delivery Specification protocol.

The ascertaining unit 133 acquires the corresponding expected charging voltage and expected charging current from the storage unit 132 based on the charging protocol supported by the device to be charged 200 and identified by the identifying unit 131, and sends the result to the power supply controller 140.

The power supply controller 140 adjusts the output voltage and output current of the AC/DC converter 120 based on the received information about the expected charging voltage and the expected charging current. For example, when the power controller 140 is in PWM mode, the duty cycle can be adjusted according to the expected charging voltage, so as to adjust the output voltage of the AC/DC converter 120 to the expected voltage value.

Optionally, the charging controller 130 further comprises a monitoring unit 134. When the actual charging current provided by the AC/DC converter 120 exceeds the expected charging current and reaches a predetermined threshold, the monitoring unit 134 stops providing the output voltage and output current to the device to be charged 200. The predetermined threshold may be set to 10% - 30% of the expected charging current of the device to be charged 200, or other appropriate values. In this way, the device to be charged 200 can be effectively protected from overcurrent. At the same time, it can also prevent the socket from overheating and damage due to excessive charging current.

The monitoring unit 134 may further be configured to limit the output current of the AC/DC converter 120 to the rated current, when the identified expected charging current of the device to be charged 200 exceeds the rated current of the AC/DC converter 120. In this way, the AC/DC converter 120 can be effectively operated within a safe current range and prevented from damage due to overcurrent or overheating.

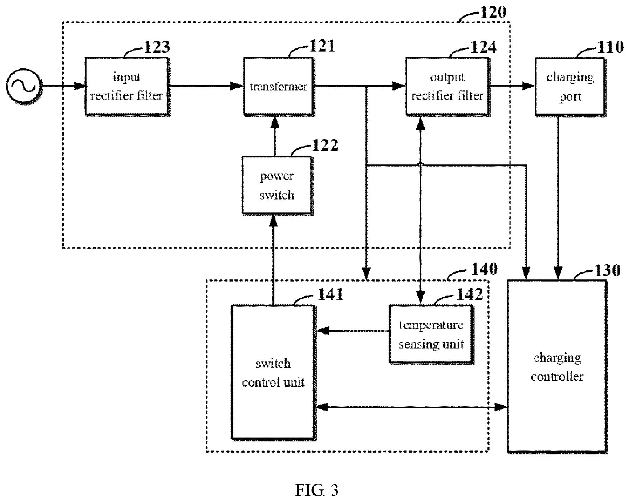

FIG. 3 illustrates a block diagram of an AC/DC converter 120 and a power supply controller of a socket 100 according to an embodiment of the present disclosure. In the embodiment shown in FIG. 3, the AC/DC converter (120) is designed to comprise a transformer 121, a power switch 122, an input rectifier filter 123 and an output rectifier filter 124.

The input rectifier filter 123 first rectifies and filters the AC input signal to eliminate the inrush current and surge voltage in the AC input signal, so as to protect the electrical equipment in the socket from damage.

The power switch 122 is coupled to the primary side of the transformer 121 and is controlled by the power supply controller 140. In a control mode such as PWM mode, the power supply controller 140 intermittently turns on and off the power switch 122 based on the expected charging voltage of the device to be charged 200 and the AC input voltage of the socket 100. The transformer 121 is for example an isolation transformer.

In this way, the duty cycle of the voltage on the primary side of the transformer 121 can be adjusted, so that a voltage value that matches the expected charging voltage of the device to be charged 200 is induced on the secondary side of the transformer 121.

The output rectification filter 124 further rectifies and filters the voltage induced on the secondary side of the transformer 121, so as to provide a substantially constant DC charging voltage to the device to be charged 200.

In the embodiment shown in FIG. 3, the power supply controller 140 may comprise a switch control unit 141. The switch control unit 141 is connected to the charging controller 130 and turns on (or turns off) the power switch 122 based on the expected charging voltage of the device to be charged 200 identified by the charging controller 130 to adjust the output voltage. The switch control unit 141 may operate in PWM mode to adjust the on/off duration of the power switch 122 based on the ratio of the expected charging voltage to the AC input of the AC/DC converter 120 (for example 220V of the mains power supply), so that the output voltage of the AC/DC converter 120 is adjusted to the expected voltage value.

The power supply controller 140 may further comprise a temperature sensing unit 142. The temperature sensing unit 142 detects the temperature of the AC/DC converter 120 through a corresponding sensor. When the temperature of the AC/DC converter 120 exceeds a predetermined temperature threshold, the temperature sensing unit 142 sends corresponding information to the switch control unit 141. The switch control unit 141 turns off the power switch 122 according to the information, so that the AC/DC converter 120 stops providing output voltage and output current. In this way, over-temperature protection can be provided for the AC/DC converter 120 to prevent the AC/DC converter 120 from damage due to excessive temperature.

It should be understood that the implementation of the AC/DC converter 120 and the power supply controller 140 in FIG. 3 is only exemplary and not restrictive. The embodiments of the present disclosure do not exclude other implementations of the AC/DC converter 120.

It should also be understood that each functional unit of the charging controller 130 and the power supply controller 140 of the embodiment of the present disclosure can be implemented in various circuit forms or other hardware forms having the function, and is not limited herein.

Various embodiments of the present disclosure have been described above. The above explanation is illustrative rather than exhaustive and is not limited to the disclosed embodiments. Without departing from the scope and spirit of each explained embodiment, many alterations and modifications are obvious for those ordinary skilled in the art. The selection of terms in the text aims to best explain principle, actual application or technical improvement in the market of each embodiment or make each embodiment disclosed in the text comprehensible for those ordinary skilled in the art.

## Claims

1. A socket (100), comprising:
a charging port (110);
an AC/DC converter (120);
a charging controller (130), which is configured to, in response to the charging port (110) being connected to a device to be charged (200), determine an expected charging voltage and an expected charging current supported by the device to be charged (200); and
a power supply controller (140), which is coupled to the charging controller (130) and is configured to adjust an output voltage and output current of the AC/DC converter (120) based on the determined expected charging voltage and expected charging current.

2. The socket according to claim 1, wherein the charging controller (130) comprises:
an identification unit (131), which is configured to identify a charging protocol supported by the device to be charged (200);
a storage unit (132), which is configured to store expected charging voltages and expected charging currents specified by a plurality of charging protocols; and
an ascertaining unit (133), which is configured to acquire the corresponding expected charging voltage and expected charging current from the storage unit (132) based on the charging protocol identified by the identification unit (131) and send them to the power supply controller (140).

3. The socket according to claim 2, wherein the charging controller (130) further comprises:
a monitoring unit (134), which is configured to, in response to the actual charging current exceeding the expected charging current and reaching a predetermined threshold, stop providing output voltage and output current to the device to be charged (200), and/or which is configured to, in respond to the expected charging current of the device to be charged (200) exceeding the rated current of the AC/DC converter (120), limit the output current of the AC/DC converter (120) to the rated current.

4. The socket according to claim 1, wherein the AC/DC converter (120) comprises:
a transformer (121) with a primary side and a secondary side;
a power switch (122), which is coupled to the primary side of the transformer (121) and is configured to be turned on based on the expected charging voltage under the control of the power supply controller (140) to adjust the output voltage;
an input rectifier filter (123), which is coupled between the AC input and the primary side of the transformer (121); and
an output rectifier filter (124), which is coupled between the secondary side of the transformer (121) and the charging port (110).

5. The socket according to claim 4, wherein the power supply controller (140) comprises:
a switch control unit (141), which is configured to turn on the power switch (122) based on the expected charging voltage to adjust the output voltage; and
a temperature sensing unit (142), which is configured to, in response to the temperature of the AC/DC converter (120) exceeding a predetermined threshold, turn off the power switch (122) by means of the switch control unit (141) to stop providing output voltage and output current.

6. The socket according to any of claims 1 to 5, wherein the AC/DC converter (120) is connected to the power supply controller (140) and/or the charging controller (130) to provide working voltage.

7. The socket according to any of claims 1 to 5, further comprising:
a socket port (150), which is configured to provide AC output voltage.

8. The socket according to any of claims 1 to 5, wherein the socket is designed as a panel mounted socket.

9. The socket according to any of claims 1 to 5, wherein the charging port (110) is a USB port.

10. The socket according to claim 7, wherein the socket port (150) is a two-hole, three-hole or five-hole socket port.

11. The socket according to any of claims 1 to 5, wherein the charging port (110), the AC/DC converter (120), the charging controller (130) and the power supply controller (140) are integrated in a charging module (160), which is detachably mounted in the socket.
